# EUROPEAN PATENT SPECIFICATION

(11) **EP 0 771 533 B1**
(45) Date of publication and mention of the grant of the patent: **09.04.2003**
(21) Application number: 95918168.6
(22) Date of filing: 11.05.1995
(51) Int. Cl.: A23L 1/0532, A23L 1/0562, A23L 1/39

(54) **GELLING AGENT COMPRISING AGAR-MODIFIED GELATIN AND FOOD CONTAINING SAID AGENT**
MIT AGAR-AGAR MODIFIZIERTE GELATINE ENTHALTENDER GELIERENDER WIRKSTOFF UND DIESEN ENTHALTENDE LEBENSMITTEL
AGENT GELIFIANT COMPRENANT DE LA GELATINE MODIFIEE PAR AGAR-AGAR, ET ALIMENT CONTENANT LEDIT AGENT

(30) Priority: 11.05.1994 JP 12076994
(43) Date of publication of application: 07.05.1997
(73) Proprietor: KABUSHIKI KAISHA KIBUN SHOKUHIN, Chuo-ku, Tokyo 104 (JP)
(72) Inventor: NOZAKI, Hisashi, Saitama 353 (JP)
(74) Representative: Meyers, Hans-Wilhelm, Dr.Dipl.-Chem.
(86) International application number: JP9500899
(87) International publication number: WO95031113

(56) References cited:
- JP-A- 2 109 950
- JP-A- 58 216 668
- JP-B- 62 034 384
- DATABASE WPI Section Ch, Week 8705 Derwent Publications Ltd., London, GB; Class D13, AN 87-034089 XP002032469 & JP 61 291 648 A (NIPPI GELATINE KOGY) , 22 December 1986
- PATENT ABSTRACTS OF JAPAN vol. 010, no. 182 (C-356), 25 June 1986 & JP 61 031068 A (NISSHIN FLOUR MILLING CO LTD), 13 February 1986,
- DATABASE WPI Section Ch, Week 9540 Derwent Publications Ltd., London, GB; Class D13, AN 95-307104 XP002032470 & JP 07 203 888 A (MIYAHARA F) , 8 August 1995

## Description

### Field of the Invention

The present invention relates to a gelling agent comprising an agar-modified gelatin, particularly a modified gelatin gel which gels without strict control of condition such as cooling and staying. The present invention also relates to a gelled food product where liquid food components such as stock and soup of oden, won ton, etc., are gelled with a gelling agent. The present invention further relates to a method for forming a gelatin gel and a method for controlling a remelting temperature of a gelled gelatin.

### Prior Art

It is generally required that food products containing solid components and liquid components such as oden, won ton, daily dishes etc., are contained in a sealed container for transportation and storage to avoid a leak of the liquid components. However, such a sealed container is often broken during transportation. When the solid components are swollen in the liquid components in the container for a long period, they are gradually degraded and deformed. There is a problem in conventional food products containing solid components and liquid components that their taste is spoiled during transportation and storage.

To prevent breaking of container and leak of liquid components, Japanese Patent Public Disclosure (Kokai) No.34384/87 discloses a gelled oden which is produced by solidifying the liquid components of oden with a gelling agent such as gelatin, more precisely by adding the gelling agent such as gelatin to the liquid components of oden to form a gel of the liquid components. The gelled oden solves the above problems and has many advantages, for example, it becomes easy to handle after production. JP-A-61-291 648 discloses mixtures comprising gelatin and ayas which are dred prior to use as a gelling agent.

Unlike other gelling agents which readily gel at a gelling temperature, a pure gelatin only gels under a restricted condition i.e. cooling at a low temperature and staying for a predetermined period. There are several problems in use of gelatin, which gels slower and should be handled carefully in the process steps and transportation. For example, careful temperature control is required.

A gelled gelatin can not be used as a gelling agent again. Additionally, a gelled gelatin has a lower remelting temperature. For example, some gelatin remelts at a temperature over 15 °C and becomes sol at 20°C to 25°C. Careful temperature control is important during transportation of gelatin.

A gelled oden is now commercially available and consumers heat it with an electromagnetic cooking machine such as a microwave oven. When the heating is insufficient, the temperature of the food is still lower than the temperature suitable for eating. When the gelled oden is excessively heated, the food becomes dried and spoiled.

It is generally hard to determine an appropriate heating time for a microwave oven. Even if the same time and temperature are set, actual heating condition varies depending on the selected oven and its manufacturer. Considering this, containers having a function to indicate the termination of cooking are sold.

It is object of the present invention to provide a gelling agent comprising an improved gelatin which gels under the condition that a conventional gelatin maintains its melt state and does not start gelation, and remelts when heated to its remelting temperature. It is also an object of the present invention to provide a gelled food product which remelts the liquid components when heated to a temperature suitable for eating.

### Disclosure of the Present Invention

The above objects are achieved by providing the present invention, which is a gelling agent comprising agar and gelatin which rapidly gels at a temperature below 10 °C and remelts at 20 to 80°C, preferably 30 to 80 °C . The present invention also provides a food product comprising such a gelling agent and a foodstuff.

Examples of the gelled food products include a gelled won ton which is produced by forming won ton soup gel with the gelling agent comprising 2% by weight of gelatin and 0.08% by weight of agar, and a gelled oden which is produced by forming oden stock gel with the gelling agent comprising 2% by weight of gelatin and 0.1% by weight of agar.

Gelatin is frequently used as a gelling agent for a liquid material since it easily remelts to be a sol having preferable functions. However, pure gelatin only gels under a strictly-controlled condition, for example cooling below 10°C and staying for a predetermined period. On the other hand, pure agar which needs not such a strict control of time and temperature only gels firmly in a concentration of 0.5% or more and does not gel in a concentration of 0.1% or less.

The present inventors have found that liquid materials can rapidly gel without staying after cooling by addition of a gelling agent comprising gelatin and a small amount of agar.

The present invention is characterized by using a gelling agent comprising gelatin and a small amount of agar instead of the conventional gelatin solution for gelation of liquid materials. The present invention needs no staying after cooling and achieves rapid gelation of the liquid materials and remarkable improvement of productivity such as simplification of the process steps.

Gelatin which is hard to gel under simple cooling and need staying after cooling for gelation even forms a firm gel rapidly below 10 °C provided that the gelatin is modified with agar according to the present invention. The remelting temperature of the gelled food product comprising the gelling agent rises to the range of the remelting temperature of gelatin to the remelting temperature of agar. Accordingly, the gelling agent of the present invention does not remelt when stayed in a warm condition for a short time.

The gelling agent of the present invention differs from unmodified gelatin on the point that the former rapidly gels without staying. The gelling agent of the present invention is particularly useful for pasta and noodles such as won ton, Chinese noodle, udon (Japanese noodle) since excessive swell in the liquid components which spoils their taste can be avoided. The gelling agent of the present invention can also eliminate a strict control of various conditions during transportation by a conveyer. The gelling agent of the present invention can avoid leak of the liquid components and stick of them to the cap and container by vibration.

When the gelling agent of the present invention comprises for example 1% to 5% by weight of gelatin, agar can be preferably added thereto in an amount of 0.3% or less, more preferably 0.01% to 0.2% by weight, still more preferably in the vicinity of 0.1% by weight. When more than 0.3% by weight of agar is added, the resultant composition has little functions of gelatin gel and melt near the melting temperature of agar. When less than 0.01% by weight of agar is added, the resultant composition is almost the same as unmodified gelatin. When 0.2% by weight or less, more preferably the vicinity of 0.1% by weight of agar is added, a preferable gelling agent can be obtained which can form such a firm gel as an unmodified gelatin gel and remelts at a temperature of 30°C to 80°C. Such a preferable gelling agent is different from unmodified gelatin and agar.

The concentration of gelatin can vary depending on the kind of gelatin and food ingredients, consistency of the mixture of food and the gelling agent, desired gel strength of the food product and others. The concentration of gelatin is not limited to 1% to 5% by weight exemplified above.

It has been found that a significant curve is formed in the graph of the remelting temperature against the concentration of agar with regard to the compositions having a constant gelatin concentration and various agar concentration. Such a graph can be obtained by preparing various gelling agents having various agar concentrations and measuring remelting temperature of these gelling agents. Based on the graph the remelting temperature can be estimated from the gelatin concentration and the agar concentration. Thus, a gelling agent having a desired remelting temperature can be easily produced.

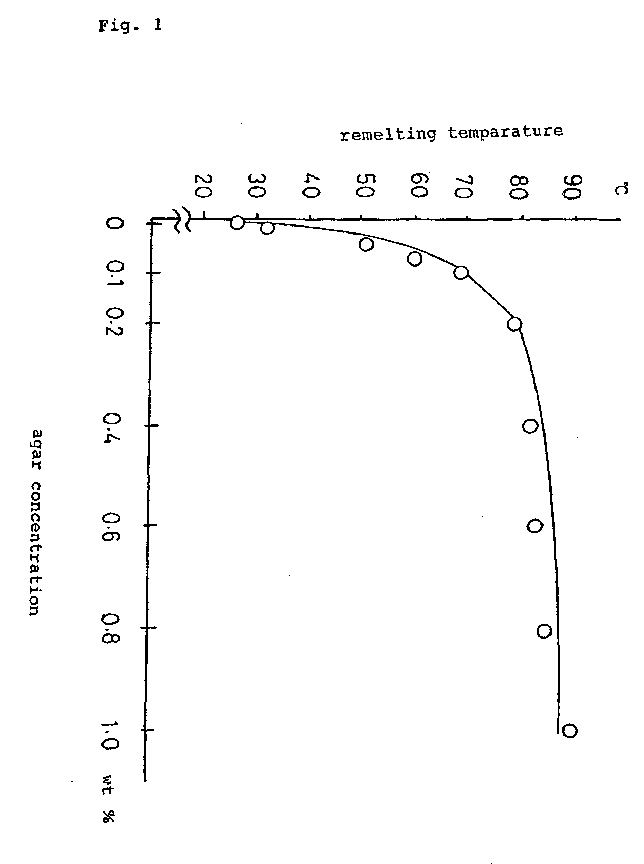

Fig.1 shows a graph of the remelting temperature against the agar concentration where the gelatin concentration in the gelling agent is 2% by weight. Fig. 1 indicates that the remelting temperature gradually rises as the agar concentration increases. Based on the graph, anybody can easily determine the agar concentration in the gelling agent corresponding to a desired remelting temperature.

The gelling agent having a predetermined remelting temperature is useful as an indicator. Use of the gelling agent enables the production of a food product which remelts at a desired temperature.

The gelling agent described above can be used in food products. When the gelling agent of the present invention comprises for example 1% to 5% by weight of gelatin, agar can be preferably added thereto in an amount of 0.3% or less, more preferably 0.01% to 0.2% by weight, still more preferably in the vicinity of 0.1% by weight. When more than 0.3% by weight of agar is added, the resultant composition has little functions of gelatin gel and melt near the melting temperature of agar. When less than 0.01% by weight of agar is added, the resultant composition is almost the same as unmodified gelatin. When 0.2% by weight or less, more preferably the vicinity of 0.1% by weight of agar is added, a preferable gelling agent can be obtained which can form such a firm gel as an unmodified gelatin gel and remelts at a temperature of 30 °C to 80°C. Such a preferable gelling agent is different from unmodified gelatin and agar.

The present invention can provide a gelled food product having a remelting temperature which is suitable for eating. Consumers can heat such a gelled food product until the remelting is completed to easily obtain a heated food suitable for eating. Excessive heating and insufficient heating can be-avoided. The temperature suitable for eating can be generally determined based on the food ingredients contained in the food product, for example 70°C to 80°C for oden and 60°C to 70°C for soup.

In an embodiment of the present invention, the gelled food product is a gelled won ton which is produced by adding a gelling agent comprising 2% by weight of gelatin and 0.08% by weight of agar to won ton soup for gelation. Consumers can prepare a won ton soup at about 65 °C by heating the gelled won ton until the remelting at about 65°C is completed. Excessive heating and insufficient heating can be avoided. In the production of the gelled won ton, gelation is completed more rapidly and accordingly the skin of the won ton is not subject to excessive swell and unacceptable tear.

In another embodiment of the present invention, the gelled food product is a gelled oden which is produced by adding a gelling agent comprising 2% by weight of gelatin and 0.1% by weight of agar to oden stock for gelation. Consumers can prepare oden stock at about 70 °C by heating the gelled oden stock until the remelting at about 70 °C is completed. Excessive heating and insufficient heating can be avoided.

A gelled food product having a desired remelting temperature can be produced by ascertaining the relations between concentrations of gelatin and agar and remelting temperature, determining the concentrations of gelatin and agar corresponding to the desired remelting temperature, adding gelatin and agar in the determined concentration to the liquid components of the food, heating the mixture to melt the added gelatin and agar, and cooling and solidifying the gelatin solution alone or with other ingredients in a desired container.

Any gelatin and agar can be used in the present invention provided that they are wholesome and safe. They may be purified or non-purified. When non-purified materials are used, the concentrations of the materials can be determined by examining the relations between the concentrations of these materials and remelting temperature as described above.

General foods have a pH which does not adversely affect the function of gelatin and agar. However, pH of the foods may be adjusted. If necessary, the concentrations of gelatin and agar may be determined based on the relations between the concentrations of gelatin and agar and the liquid components of the food.

The produced gelled food product can be contained in a container with a sealable lid, which are made of a synthetic resin, aluminium or others. It may be contained in a sealed bag provided that it is moved to another container before heating.

### Example A: Measurement of remelting temperature

To a solution comprising 2% by weight of gelatin (AB-320 manufactured by Miyagi Chemical) was added agar (1st grade manufactured by Wako) in an amount of 0, 0.01, 0.05, 0.075, 0.1, 0.2, 0.4, 0.6, 0.8 or 1.0% by weight to form a gelling agent. Each of the gelling agent was poured into a glass tube having 5mm diameter and small air bubbles are trapped in the bottom of the tube. The tubes are cooled in an ice water for 30 minutes.

The tubes containing the gelling agents are gradually warmed in water at 15°C and then heated by 1 °C/min. The temperature where the small air bubbles rise to the surface was recorded as remelting temperature.

The result is shown in Fig.1 wherein the transverse axis denotes concentration of the added agar and the longitudinal axis denotes remelting temperature. Fig.1 indicates that the increase of the melting temperature of the gelling agent is almost proportioned to the increase of the agar concentration in the range of 0.01% to 0.2% by weight. As the agar concentration increases over 0.2% by weight, the gradient gradually decreases to reach the remelting temperature of agar.

A gelation solution prepared by adding a small amount of agar to a solution comprising 1-5% by weight of gelatin can also form a firm gel in the same manner described above. The firm gel remelted to form a desirable gelatin solution which was hardly viscous.

The gelation temperature of the gelling agents is higher than that of a pure gelatin solution. When the temperature of the gelling agent reaches at the gelation temperature, the gelling agent gels without a staying step as is required by gelation of a pure gelatin. It is expected that the gelling agent can remarkably improve the productivity of food products. The gelling agent is particularly useful for food products containing an ingredient which is easily dissolves and swollen when immersed in liquid components for a long period, for example pasta and noodle such as won ton, Chinese noodle and udon (Japanese noodle).

The remelting temperature of the gelled liquid components formed by the addition of a predetermined amount of gelatin and agar can be estimated by Fig.1. Accordingly, a food product having a desired remelting point can be produced by determining the concentrations of gelatin and agar corresponding to the desired remelting point, adding gelatin and agar to liquid food components in the determined concentrations, heating the mixture to dissolve the gelatin and agar in the liquid food components, cooling and solidifying the mixed solution or the mixed solution with other food ingredients in a desirable container. The relations between the remelting temperature and the agar concentration vary depending on the kind of gelatin, concentration of the gelation, the kind of agar, concentration of the agar to some extent.

### Example B: Production of gelled won ton

To 1000ml of chicken soup were added 50ml of soy sauce, 8g of table salt, 3g of monosodium glutamate and a small amount of pepper. Then, 20g of gelatin (Gelatin 21g manufactured by Nitta Gelatin) and 0.8g of powdery agar were added and swollen and the resultant mixture was heated at 90 °C to dissolve the gelatin and agar.

A minced meat with salt and pepper was wrapped with a skin of won ton to prepare won ton, which was steamed at 85°C and cooled. The above prepared soup (200ml) in which gelatin and agar dissolved was added to six pieces of the won ton contained in a synthetic resin container and the mixture'was cooled for gelation. As the temperature of the mixture fell down to about 15°C, gelation of the liquid components began. As the temperature reached at 10 °C, the liquid components completely gelled to form a gelled won ton. For comparison, won ton with a pure gelatin containing no agar was cooked in the same manner but no gelation of the liquid components occurred at 10°C.

The gelled won ton was heated in a 500W microwave oven for domestic use until the liquid components remelted. The remelting temperature was 65 °C which is suitable for eating. The skin of won ton was not subject to an unacceptable swelling and deformation and the cooked skin was elastic and tasty.

### Example C: Production of gelled oden

To 1000ml of oden stock were added 20g of gelatin (AB-320 manufactured by Miyagi Chemical) and 1g of powdery agar. The mixture was stayed for 10 minutes to be swollen and heated at 85 °C to dissolve the gelatin and agar.

Japanese radish, taro, konjak, chikuwa (Japanese fish paste cooked in a bamboo-like shape), fried fish balls as oden ingredients were dipped in a hot water and boiled in a stock. Vegetables were cooked and boiled in water and then in the stock. These oden ingredients and vegetables were put in a styrol container and 250ml of the above-prepared oden stock containing gelatin and agar was added to the container. The mixture was cooled for gelation. As the temperature fell down to about 15°C, gelation of the liquid components began. As the temperature reached at 10°C, the liquid components completely gelled to form a gelled oden. For comparison, oden stock with a pure gelatin containing no agar was cooked in the same manner but no gelation of the liquid components occurred at 10°C.

The solidified oden was heated in a 500W microwave oven for domestic use. When the liquid components remelted, the food product was taken out. The temperature of the product was 71°C, which is suitable for eat.

### Industrial Applicability of the Invention

The gelling agent produced by heating and dissolving a composition comprising gelatin and a small amount of agar rapidly gels without strict control of the condition. When used for producing food products, the gelling agent can simplify the process steps and remarkably improve the productivity. A firm gelatin gel can be rapidly formed by cooling the gelling agent, for example, below 10 °C. As the remelting temperature of the gelling agent rises to the range of the remelting temperature of gelatin to the remelting temperature of agar, the gelatin gel does not remelt when stayed in a warm condition for a short time.

The food product having a desired remelting temperature can be produced by the steps of preparing various samples having gelatin and a small amount of agar, measuring the remelting temperature of the samples to ascertain the relations between the concentrations of gelatin and agar and remelting temperature and determining the concentration of gelatin and agar in the food product to achieve a desired remelting temperature based on the relations. The remelting temperature of the food product can be adjusted by controlling the concentrations of gelatin and agar. The gelling agent can be used as an indicator of the remelting temperature. According to the method of the present invention, remelting temperature of the gelatin gel can be controlled and accordingly remelting temperature of the food product comprising the gelatin gel can be controlled. If heating of the food product is stopped at the completion of the gelatin remelt, a hot food suitable for eating can be obtained. Thus, excess heating and insufficient heating can be avoided.

## Claims

1. Use of a composition comprising agar and gelatin wherein said composition rapidly gels at a temperature below 10 °C and remelts at a temperature of 20 °C to 80 °C, as a gelling agent.

2. The use of claim 1, wherein said composition remelts at a temperature of 30 °C to 80 °C.

3. The use of claim 1, wherein said composition comprises gelatin and agar In a ratio of 5:0.01 to 1:0.3.

4. The use of claim 1, wherein said composition comprises gelatin and agar in a ratio of 5:0.01 to 1:0.2.

5. A food product comprising food ingredients and a composition comprising agar and gelatin of Claim 1.

6. The food product according to claim 6 which comprises 1% to 5% by weight of gelatin.

7. The food product according to claim 6 which comprises 0.01% to 0.3% by weight of agar.

8. The food product according to claim 8 which comprises 0.01% to 0.2% by weight of agar.

9. The food product according to claim 6 which contains liquid components.

10. The food product according to claim 6 which is oden, won ton, udon or Chinese noodles.

11. The food product according to claim 10 wherein the liquid components remelt at a temperature of 30 to 80 °C.

## Patentansprüche

1. Verwendung einer Zusammensetzung, die Agar und Gelatine umfasst, als Gelierungsmittel, wobei die Zusammensetzung bei einer Temperatur unterhalb von 10 °C schnell geliert und bei einer Temperatur von 20 °C bis 80 °C erneut schmilzt.

2. Verwendung gemäß Anspruch 1, wobei die Zusammensetzung bei einer Temperatur von 30 °C bis 80 °C erneut schmilzt.

3. Verwendung gemäß Anspruch 1, wobei die Zusammensetzung Gelatine und Agar in einem Verhältnis von 5:0,01 bis 1:0,3 umfasst.

4. Verwendung gemäß Anspruch 1, wobei die Zusammensetzung Gelatine und Agar in einem Verhältnis von 5:0,01 bis 1:0,2 umfasst.

5. Nahrungsmittelprodukt, umfassend Nahrungsmittel-Inhaltsstoffe und eine Zusammensetzung, die Agar und Gelatine gemäß Anspruch 1 umfasst.

6. Nahrungsmittelprodukt gemäß Anspruch 5, das 1 Gew.-% bis 5 Gew.-% Gelatine umfasst.

7. Nahrungsmittelprodukt gemäß Anspruch 5, das 0,01 Gew.-% bis 0,3 Gew.-% Agar umfasst.

8. Nahrungsmittelprodukt gemäß Anspruch 7, das 0,01 Gew.-% bis 0,2 Gew.-% Agar umfasst.

9. Nahrungsmittelprodukt gemäß Anspruch 5, das flüssige Komponenten enthält.

10. Nahrungsmittelprodukt gemäß Anspruch 5, das Odon, Won Ton, Udon oder chinesische Nudeln (Glasnudeln) darstellt.

11. Nahrungsmittelprodukt gemäß Anspruch 9, in welchem die flüssigen Komponenten bei einer Temperatur von 30 °C bis 80 °C erneut schmelzen.

## Revendications

1. Utilisation d'une composition comprenant de la gélose et de la gélatine en tant qu'agent gélifiant, dans laquelle ladite composition se gélifie rapidement à une température inférieure à 10 °C et refond à une température de 20 °C à 80 °C.

2. Utilisation selon la revendication 1, dans laquelle ladite composition refond à une température de 30 °C à 80 °C.

3. Utilisation selon la revendication 1, dans laquelle ladite composition comprend de la gélatine et de la gélose en un rapport de 5:0,01 à 1:0,3.

4. Utilisation selon la revendication 1, dans laquelle ladite composition comprend de la gélatine et de la gélose en un rapport de 5:0,01 à 1:0,2.

5. Produit alimentaire comprenant des ingrédients alimentaires et composition comprenant de la gélose et de la gélatine selon la revendication 1.

6. Produit alimentaire selon la revendication 6, qui comprend 1 % à 5 % en poids de gélatine.

7. Produit alimentaire selon la revendication 6, qui comprend 0,01 % à 0,3 % en poids de gélose.

8. Produit alimentaire selon la revendication 8, qui comprend 0,01 % à 0,2 % en poids de gélose.

9. Produit alimentaire selon la revendication 6, qui contient des constituants liquides.

10. Produit alimentaire selon la revendication 6, qui est de l'oden, des raviolis chinois (won ton), de l'udon ou des nouilles chinoises.

11. Produit alimentaire selon la revendication 10, dans lequel les constituants liquides refondent à une température de 30 à 80 °C.
